# EUROPEAN PATENT SPECIFICATION

(11) **EP 3 297 313 B1**
(45) Date of publication and mention of the grant of the patent: **09.09.2020**
(21) Application number: 16802573.2
(22) Date of filing: 02.06.2016
(51) Int. Cl.: H04W 16/14

(54) **DEVICE AND SPECTRUM MANAGEMENT DEVICE USED FOR WIRELESS COMMUNICATION**
VORRICHTUNG UND SPEKTRUMSVERWALTUNGSVORRICHTUNG ZUR VERWENDUNG FÜR DRAHTLOSE KOMMUNIKATION
DISPOSITIF ET DISPOSITIF DE GESTION DE SPECTRE UTILISÉ POUR UNE COMMUNICATION SANS FIL

(30) Priority: 04.06.2015 CN 201510303393
(43) Date of publication of application: 21.03.2018
(60) Divisional application: 20181929.9
(73) Proprietor: Sony Corporation, Tokyo 108-0075 (JP)
(72) Inventor: SUN, Chen, Beijing 100028 (CN); WEI, Yuxin, Beijing 100028 (CN); CHEN, Jinhui, Beijing 100028 (CN); GUO, Xin, Beijing 100028 (CN)
(74) Representative: D Young & Co LLP
(86) International application number: PCT/CN2016/084485
(87) International publication number: WO 2016/192650

(56) References cited:
- WO-A1-2012/139278
- WO-A1-2013/179095
- WO-A1-2016/062213
- CN-A- 103 765 824
- CN-A- 103 765 824
- CN-A- 104 540 158
- US-A1- 2015 056 931
- US-A1- 2015 098 397
- SAMSUNG: "Discussion on carrier selection for LAA", 3GPP DRAFT; R1-144740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050875818, Retrieved from the Internet: URL:http://www.3gpp.org/ftp/Meetings_3GPP_ SYNC/RAN1/Docs/ [retrieved on 2014-11-17]
- NOKIA CORPORATION ET AL: "Overview of possible LAA impact to RAN2", 3GPP DRAFT; R2-150188 OVERVIEW OF POSSIBLE LAA IMPACTS TO RAN2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20150209 - 20150213 8 February 2015 (2015-02-08), XP050935534, Retrieved from the Internet: URL:http://www.3gpp.org/ftp/Meetings_3GPP_ SYNC/RAN2/Docs/ [retrieved on 2015-02-08]
- 3GPP: '3rd Generation Partnership Project; Technical Specification Group Radio Access Network; Study on Licensed-Assisted Access to Unlicensed Spectrum; (Release 13' 3GPPTR 36.889 V1.0.0 31 May 2015, pages 36 - 73, XP055334223

## Description

### FIELD OF THE INVENTION

Embodiments of the present disclosure generally relate to the technical field of wireless communications, particularly to the determination of spectrum time validity on spectrum resources of an unlicensed frequency band in wireless communications, and in more particular to an apparatus, a spectrum management apparatus, and a user equipment for wireless communications.

### BACKGROUND OF THE INVENTION

With the development and evolution of wireless networks, more and more services are carried by the wireless networks. In this case, additional spectrum resources are required to support the transmission of a large amount of data. Cellular wireless network operators start discussing how to use unlicensed spectrum resources such as the 5 GHz ISM frequency band, while operating the existing LTE networks. On the other hand, more WiFi systems are being deployed in the unlicensed spectrum in the WiFi wireless industry. Since communication systems of different operators and communication systems under different communication protocols have the equal right to use the unlicensed frequency band, it is desired to solve a problem in the industry that how to use the same unlicensed frequency band fairly and effectively. Prior art is described in US2015/09397 and SAMSUNG: "Discussion on carrier selection for LAA", 3GPP DRAFT; R1-144740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE val. RAN WG1, no. San Francisco, USA; 20141117- 20141121 17 November 2014 (2014-11-17) URL:http://www.3gpp.org/ftp/Meetings_3GPP SYNC/RAN1/Docs/

### SUMMARY OF THE INVENTION

The invention is defined by the independent claims. Further embodiments of the invention are described in the dependent claims. Any "aspect", "embodiment", or "example" described in the following and not falling within the scope of the claimed invention thus defined is to be interpreted as background information provided to facilitate the understanding of the claimed invention.

In the following, an overview of the present invention is given simply to provide basic understanding to some aspects of the present invention. It should be understood that this overview is not an exhaustive overview of the present invention. It is not intended to determine a critical part or an important part of the present invention, nor to limit the scope of the present invention. An object of the overview is only to give some concepts in a simplified manner, which serves as a preface of a more detailed description described later.

According to an aspect of the present application, a spectrum management apparatus according to claim 1 is provided.

With the apparatus and method according to the present disclosure, the spectrum time validity for the LTE system to use the unlicensed frequency band is determined based on the spectrum sensing result on the unlicensed frequency band. In this case, for example, LTE systems operated by different operators can stop using the unlicensed frequency band at the same time, thereby achieving an impartial usage of the unlicensed frequency band. In addition, repeated detection or operation can be reduced by referring to a spectrum using schedule of a system already occupied the unlicensed frequency band.

These and other advantages of the present disclosure will be more apparent by illustrating in detail a preferred embodiment of the present invention in conjunction with accompanying drawings below.

### BRIEF DESCRIPTION OF THE DRAWINGS

To further set forth the above and other advantages and features of the present invention, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present invention and should not be construed as a limitation to the scope of the invention. In the accompanying drawings:
Figure 1 is a block diagram showing a structure of a spectrum management apparatus for wireless communications according to an embodiment of the present disclosure;
Figure 2 shows a schematic diagram of an example where a WiFi system and LTE systems of different operators use spectrum resources of the unlicensed frequency band;
Figure 3 shows a schematic diagram where an LTE system operates based on a determined spectrum time validity;
Figure 4 shows a schematic diagram of four application scenarios;
Figure 5 is a block diagram showing a structure of a spectrum management apparatus for wireless communications according to another embodiment of the present disclosure;
Figure 6 is a block diagram showing a structure of an apparatus for wireless communications according to an embodiment of the present disclosure;
Figure 7 is a block diagram showing a structure of a user equipment for wireless communications according to an embodiment of the present disclosure;
Figure 8 is a flowchart showing a spectrum management method for wireless communications according to an embodiment of the present disclosure;
Figure 9 is a flowchart showing a spectrum management method for wireless communications according to another embodiment of the present disclosure;
Figure 10 is a flowchart showing a method for wireless communications according to another embodiment of the present disclosure;
Figure 11 is a flowchart showing a method for wireless communications according to another embodiment of the present disclosure;
Figure 12 is a flowchart showing a method for a user equipment in wireless communications according to another embodiment of the present disclosure; and
Figure 13 is an exemplary block diagram illustrating the structure of a general purpose personal computer capable of realizing the method and/or device and/or system according to the embodiments of the present invention.

### DETAILED DESCRIPTION OF EMBODIMENTS

An exemplary embodiment of the present invention will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present invention due to unnecessary details, only a device structure and/or processing steps closely related to the solution according to the present invention are illustrated in the accompanying drawing, and other details having little relationship to the present invention are omitted.

### <First embodiment

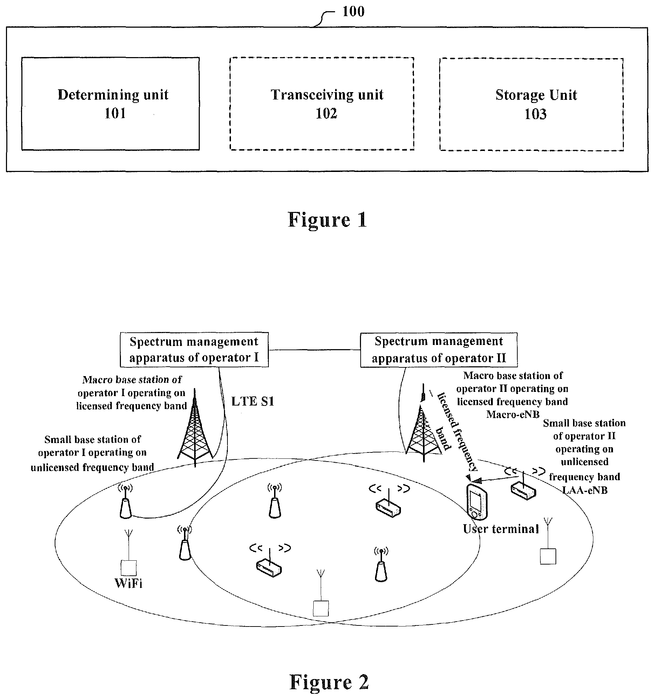

Figure 1 is a block diagram showing a structure of a spectrum management apparatus 100 for wireless communications according to an embodiment of the present application. The spectrum management apparatus 100 includes: a determining unit 101, configured to determine in different manners, based on a spectrum sensing result with respect to an unlicensed frequency band by an LTE system in a management range of the spectrum management apparatus 100, spectrum time validity for the LTE system to use the unlicensed frequency band.

As described above, with the development of data services, it is desired by different operators and even different types of wireless communication systems such as WiFi systems and LTE systems to share an unlicensed frequency band. Time division may be adopted as an approach to achieve the above object, that is, different spectrum usage time periods are allocated to different communication systems. In this approach, LTE cells using the unlicensed frequency band belong to different operators are required to be synchronized. In addition, the LTE system may be required to transmit WiFi signals to make the WiFi system and the LTE system cooperate with each other, which may cause a great change to existing standards and chips. In addition, it can be understood that the time-division approach has a low efficiency in the case of unbalanced network load.

For ease of understanding, Figure 2 shows a schematic diagram of an example where LTE systems of different operators and WiFi systems share spectrum resources of an unlicensed frequency band.

In this example, different operators provide wireless network coverage with their licensed frequency bands. In order to provide additional spectrum resources to users for transmitting more data, the operators may deploy, for example, small base stations providing small cell coverage, in an unlicensed frequency band. In this case, a user terminal can access in a network of the unlicensed frequency band while accessing in the licensed frequency band. For example, downlink data transmission is performed via a network of the unlicensed frequency band in a carrier aggregation manner to supplement a downlink data transmission capacity of a network of the licensed frequency band. Here, instead of being particularly limited, the unlicensed frequency band may be frequency bands of 2.4G and 5G which are used in industry, scientific research and medical fields, a television frequency band, or an unlicensed frequency band specified according to national regulations such as US 3.5GHz. The technology according to the present disclosure can be adapted to any of the above frequency bands.

In addition, Figure 2 shows a combination manner in which a macro base station operates on the licensed frequency band and a small base station operates on the unlicensed frequency band. However, the present disclosure is not limited thereto. Alternatively, a network of the licensed frequency band may be provided by a small base station, a network of the unlicensed frequency band may be provided by a macro base station, or both the network of the licensed frequency band and the network of the unlicensed frequency band may be provided by a multi-band base station. The spectrum management apparatus shown in Figure 2, for example, may be the spectrum management apparatus 100 for managing the use of the unlicensed frequency band. Besides, spectrum management apparatus of different operators may exchange information with one another for coordination.

The spectrum management apparatus 100 determines in different manners, based on the spectrum sensing result on the unlicensed frequency band, i.e., the spectrum resource usage conditions of the unlicensed frequency band, spectrum time validity for the LTE system to use the unlicensed frequency band. In other words, the spectrum time validity for the LTE system is determined by the spectrum management apparatus 100 based on the spectrum sensing result of the LTE system correspondingly, instead of being determined in a time-division manner in advance. It should be noted that, in some examples of the present application, the LTE system may be understood as a cell-level system in an LTE communication system, for example, including a base station (macro base station or small base station) and one or more user equipments. In other examples, the LTE system may be understood as multiple base stations and one or more user equipments. In still other examples, for example, in device-to-device communication scenarios, the LTE system may be understood as a device cluster formed by multiple user equipments.

The spectrum management apparatus 100 may be arranged at a base station side, for example, implemented by a macro base station or a small base station, or may be arranged in a core network, for example, implemented by Evolved Packet Core (Evolved Packet Core, EPC) under the LTE protocol.

In an example, the determining unit 101 may be configured to, in the case that the spectrum sensing result indicates that there is no signal transmitting over the unlicensed frequency band, determine a predetermined period of time starting from a current time as the spectrum time validity for an LTE system performing the spectrum sensing.

The spectrum sensing can be performed, for example, by a small base station and/or a user equipment. For example, in the case that the spectrum sensing result indicates that there is no signal of a primary system authorized to use the unlicensed frequency band such as a radar and a television or that of a secondary system such as an LTE system or a WiFi system, transmitting over the unlicensed frequency band, the spectrum management apparatus 100 determines that the LTE system currently performing the spectrum sensing can immediately use the unlicensed frequency band and sets a predetermined period of time starting from a current time instant (such as a time instant at which the spectrum sensing is performed) as the spectrum time validity for the LTE system. In the example of Figure 2, for example, a small base station of operator II operating on the unlicensed frequency band performs the spectrum sensing. When the spectrum sensing result indicates that there is no signal transmitting on the unlicensed frequency band, the determining unit 101 determines that the small base station can immediately use the unlicensed frequency band and determines the spectrum usage time validity as, for example, 10ms.

In an example, the determining unit 101 is further configured to determine the predetermined period of time based on a usage duration in which a WiFi system and an LTE system within a predetermined range of a location of the LTE system performing the spectrum sensing use the unlicensed frequency band, the amount of data transmitted by the WiFi system and the LTE system, a network load of the WiFi system and LTE system and the number of users of the WiFi system and LTE system. The determination may be performed in advance and statically, or may be performed dynamically. For example, if the usage duration of the WiFi system is generally long, then a short spectrum time validity may be set for the LTE system. Or, for example, if the amount of data transmitted by the LTE system, the network load of the LTE system and the number of users of the LTE system is large, a long spectrum time validity may be set for the LTE system. In addition, the determining unit 101 may further divide the management range into multiple sub-regions and set different predetermined periods of time for the respective sub-regions. In this case, the corresponding predetermined period of time, i.e., the spectrum time validity, may be determined based on a geographical location of the LTE system performing the spectrum sensing.

On the other hand, the determining unit 101 may be configured to, in the case that the spectrum sensing result indicates that there exists another LTE system using spectrum resources of the unlicensed frequency band, determine spectrum time validity for the LTE system performing the spectrum sensing based on spectrum time validity of the existing another LTE system. For example, the spectrum time validity may include a spectrum usage expiration time for using the spectrum resources of the unlicensed frequency band. In this case, LTE communication protocol-based communication systems operated by different operators may stop using the unlicensed frequency band at the same time, thereby ensuring a WiFi communication system to impartially use the unlicensed frequency band. In addition, a subsequent LTE system can refer directly to a spectrum usage schedule on the unlicensed frequency band of the LTE system already occupied the unlicensed frequency band previously, instead of acquiring again, for example, the above predetermined period of time or calculating the expiration time based on the predetermined period of time.

Specifically, for example, the determining unit 101 may set the spectrum time validity for the LTE system performing the spectrum sensing to be the same as the spectrum time validity for the existing another LTE system. In some examples, the spectrum sensing may be performed on one or more different unlicensed frequency bands. In the case that the spectrum sensing result indicates that there are multiple other LTE systems that may be over the same unlicensed frequency band or over different unlicensed frequency bands, one of the LTE systems may be selected, for example, based on the intensity of signals detected over the corresponding unlicensed frequency band and/or the spectrum time validity for the existing LTE system. For example, an LTE system with large signal intensity may cause large interference to a new LTE system. However, the LTE system can still be selected if its available spectrum time validity is long (and an unlicensed frequency band on which the LTE system operates is determined to be used meanwhile). In addition, the spectrum time validity of the current LTE system is determined based on the spectrum time validity of the selected LTE system.

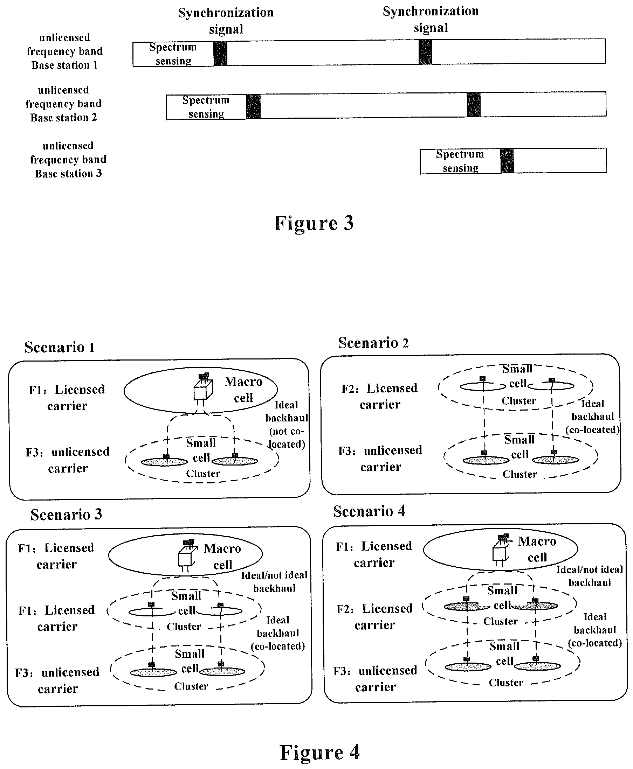

Figure 3 shows a schematic diagram in which an LTE system operates based on the spectrum time validity determined by the determining unit 101. Still taking the scenario shown in Figure 2 as an example, after determining the available spectrum resources and the spectrum time validity, the small base station can provide a network on the determined available unlicensed frequency band and start sending a synchronization signal for access by the user equipment. Lengths of spectrum available time durations for available spectrum resources obtained in different manners may vary, as shown in Figure 3. No signal is detected by small base station 1 in the energy detection, and hence spectrum time validity with a constant length is determined for the small base station 1. After detecting a synchronization signal of the small base station 1 in the energy detection, a small base station 2 acquires the spectrum time validity of the small base station 1, and then sends its own synchronization signal and takes the spectrum time validity of the small base station 1 as its own spectrum time validity. The small base station 3 obtains available spectrum resources and sends a synchronization signal in the same manner. In an example, the user equipment may access to one of the small base stations as needed. For example, the user equipment may select a small base station with large signal intensity and a long remaining spectrum available time duration, to perform a random access operation. In another example, a serving base station corresponding to a primary carrier of the user equipment, such as a macro base station, may add a small base station for the user equipment as its slave base station (Slave Base Station), based on spectrum time validity, signal intensity and the like of respective small base stations. For example, the user equipment may establish a dual connectivity (Dual Connectivity) with the macro base station and the small base station.

In addition, in the example shown in Figure 2, spectrum management apparatus of different operators may share, by interacting with each other, an identifier of an LTE system using the unlicensed frequency band, such as a cell ID and information on corresponding spectrum time validity.

In this way, the same occupied unlicensed frequency band can be released simultaneously by different LTE operators, to ensure systems under other communication protocols such as WiFi to use the unlicensed frequency band impartially.

Furthermore, as shown by a dashed line block in Figure 1, the spectrum management apparatus 100 may further include a storage unit 103, configured to store a list of cell IDs and corresponding spectrum time validity of LTE systems using the unlicensed frequency band. In this case, the determining unit 101 may determine the relevant spectrum time validity by referring to the list.

The list may further include at least one of: an identifier of an operator the LTE system belongs to, a geographical location where the LTE system is located, and an identifier of an unlicensed frequency band that the LTE system occupies. The list may be shared among different operators. Also, the spectrum management apparatus 100 may also be shared by different operators, for example, may manage cells of multiple operators the geographical locations of which are close to each other.

As shown by another dashed line block in Figure 1, the spectrum management apparatus 100 may further include a transceiving unit 102, configured to receive a spectrum sensing result from a base station and/or a user equipment of an LTE system performing spectrum sensing, and transmit information on the determined spectrum time validity to the base station and/or the user equipment of the LTE system.

For example, the transceiving unit 102 may receive the spectrum sensing result and transmit the information on the spectrum time validity over a licensed frequency band. The spectrum sensing result may include cell IDs and information on signal quality of the detected other LTE systems using spectrum resources of the unlicensed frequency band. It will be understood that, it is not necessary to receive the spectrum sensing result over the licensed frequency band in the case that the spectrum management apparatus 100 is connected to a base station in a wired ideal backhaul manner. In addition, in an example where the spectrum management apparatus 100 is located in a core network, the spectrum sensing result and the information on the spectrum time validity are carried in S1 signaling under the LTE communication protocol and are transmitted between the base station and the spectrum management apparatus 100 through an S1 interface. In an example where the spectrum management apparatus 100 is located in a macro base station, the spectrum sensing result and the information on the spectrum time validity are carried in X2 signaling under the LTE communication protocol and are transmitted between a small base station and the macro base station through an X2 interface. In yet another example where the spectrum management apparatus 100 is located in a macro base station, the spectrum sensing result and the information on the spectrum time validity are carried in RRC signaling under the LTE communication protocol and transmitted between a user equipment and the macro base station.

The determining unit 101 acquires, based on a cell ID of another LTE system, its corresponding spectrum time validity, and determines the acquired spectrum time validity as spectrum time validity for the LTE system performing the spectrum sensing. After receiving information on spectrum time validity transmitted from the transceiving unit 102, the LTE system performing the spectrum sensing uses spectrum resources of the unlicensed frequency band based on the information on the spectrum time validity.

In the example shown in Figure 2, for example, the spectrum sensing result of a small base station and/or a user equipment is transmitted to a corresponding spectrum management apparatus via a macro base station. Then, the spectrum time validity is determined by the spectrum management apparatus based on the spectrum sensing result and transmitted to the above mentioned small base station and/or the user equipment via the macro base station.

Figure 4 shows four scenarios defined by 3GPP TR36.889 V0.1.1 (2014-11). In scenario 1, carrier aggregation is performed between a macro cell using a licensed carrier F1 and a small cell using an unlicensed carrier F3. In scenario 2, carrier aggregation is performed between a small cell using a licensed carrier F2 and a small cell using the unlicensed carrier F3, with no macro cell coverage. In scenario 3, carrier aggregation is performed between a small cell using the licensed carrier F1 and a small cell using the unlicensed carrier F3, and there is coverage of a macro cell using the licensed carrier F1. In scenario 4, carrier aggregation is performed between a small cell using the licensed carrier F2 and a small cell using the unlicensed carrier F3, and there is coverage of a macro cell using the licensed carrier F1.

As a specific embodiment, in the scenarios 1, 3 and 4, the spectrum management apparatus 100 may be provided in the macro base station. In the scenario 2, the spectrum management apparatus 100 may be provided in the core network.

### <Second embodiment

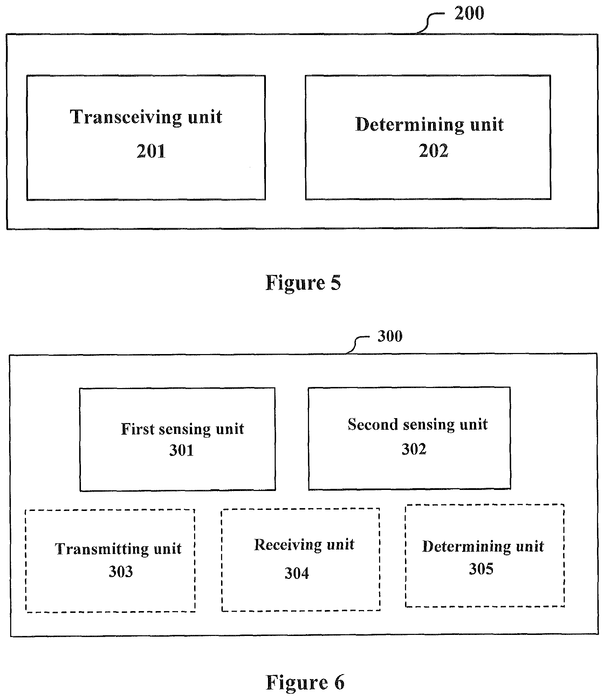

Figure 5 shows a block diagram of a structure of a spectrum management apparatus 200 for wireless communications according to another embodiment of the present application. The spectrum management apparatus 200 includes: a transceiving unit 201, configured to receive, from a user equipment, cell IDs and information on corresponding signal quality, of LTE systems detected by the user equipment on an unlicensed frequency band; and a determining unit 202, configured to determine spectrum time validity corresponding to the LTE systems based on the cell IDs of the LTE systems and select one of the detected LTE systems based on the determined spectrum time validity for the user equipment to access in. In the second embodiment, the LTE systems belong to the same operator, and thus the spectrum management apparatus 200 can select an appropriate cell for the user equipment to access in. In the embodiment, the spectrum management apparatus 200 is preferably arranged on a base station side, for example, implemented by a macro base station.

As shown in Figure 3, multiple small base stations operating on the unlicensed frequency band may exist around the user equipment, and different small base stations may have different spectrum time validity on the unlicensed frequency band. A user equipment performs signal detection to obtain cell IDs and information on corresponding signal quality of LTE systems already using the unlicensed frequency band. For example, RSRP or RSRQ of a cell specific reference signal (CRS) transmitted by the respective small base stations on the unlicensed frequency band may be measured. After the above information is obtained by the transceiving unit 201, the determining unit 202 firstly obtains the spectrum time validity of the LTE systems based on the obtained IDs and selects an appropriate LTE system based on the spectrum time validity, for the user equipment to access in. The user equipment may be triggered by the spectrum management apparatus 200 to detect the unlicensed frequency band and report. For example, the spectrum management apparatus 200 determines, based on a current network load, that a portion of the service for the user equipment needs to be distributed from the current serving base station of the user equipment to a small base station operating on the unlicensed frequency band, thereby triggering the above detection and report.

In an example, the determining unit 202 may be further configured to perform the selection based on a service requirement of the user equipment and/or the information on signal quality. For example, if the user equipment requires performing a quick download, an LTE cell which has short time validity but has good channel quality may be selected to be accessed. Yet, if the user equipment requires performing an application with a low time-delay requirement, an LTE cell which has long time validity but has poor channel quality may be selected to be accessed. The above service is, for example, a service that is determined to be distributed to a small base station.

In addition, the transceiving unit 201 may further be configured to transmit the cell ID and information on the spectrum time validity of the selected LTE system to the user equipment. As an example, the transceiving unit 201 may be configured to transmit the information on the spectrum time validity and the cell ID of the selected LTE system to the user equipment via one of: a broadcast channel (BCH), a physical downlink control channel (PDCCH), or a physical downlink shared channel (PDSCH). For example, the transceiving unit 201 may transmit system information (MIB, SIB) including the cell ID and the information on the spectrum time validity to the user equipment over a licensed frequency band on which the user equipment is in connection. The above system information on a small base station operating on an unlicensed frequency band may be included in broadcast signaling or may be included in dedicated signaling to the user equipment such as RRC signaling. In this case, the transceiving unit 201 may transmit the cell ID of the selected LTE system and the information on its spectrum time validity by RRC signaling.

For example, in the scenarios 1 and 3 shown in Figure 4, the network of the licensed frequency band and the network of the unlicensed frequency band are formed by different LTE cells. The spectrum management apparatus 200 can select an LTE cell operating on the unlicensed frequency band which is to be accessed by the user equipment.

In an example, the transceiving unit 201 is further configured to interchange, among spectrum management apparatus, cell IDs and information on spectrum time validity of LTE systems in respective management ranges of the spectrum management apparatus.

The transceiving unit 201 may be further configured to transmit cell IDs and information on spectrum time validity of LTE systems having obtained spectrum resources of the unlicensed frequency band by transmitting a MBSFN sub frame on a licensed frequency band. Particularly, especially for stand-alone (stand-alone) small base stations of the unlicensed frequency band, different small base stations may transmit their cell IDs and information on their spectrum time validity with the MBSFN sub frame on the licensed frequency band. After acquiring an ID of a cell of the unlicensed frequency band to be accessed via the transceiving unit 201, the user equipment listens for information on spectrum time validity corresponding to the cell on the licensed frequency band.

### <Third embodiment

Figure 6 shows a block diagram of a structure of an apparatus 300 for wireless communications according to an embodiment of the present application. The apparatus 300 includes: a first sensing unit 301, configured to perform energy sensing with respect to an unlicensed frequency band to determine whether there is a signal transmitting over the unlicensed frequency band; and a second sensing unit 302, configured to detect, in the case that the first sensing unit 301 determines that there is a signal transmitting over the unlicensed frequency band, whether the signal is an LTE signal.

The apparatus 300 may be provided, for example, on a small base station side, but is not limited thereto. It may also be provided on a macro base station side or a user equipment side. The first sensing unit 301 and the second sensing unit 302 perform two steps of spectrum sensing. The first sensing unit 301 determines, based on signal energy, whether there is a signal transmitting. The signal here includes but is not limited to a signal of a primary system and a signal of a secondary system such as a WiFi system or an LTE system. If it is determined that there is a signal which is transmitting, the second sensing unit 302 further detects whether the signal is an LTE signal, in order to determine whether the unlicensed frequency band is being occupied by another LTE system. As an example, the second sensing unit 302 may detect whether the signal is the LTE signal by detecting a synchronization signal PSS of the LTE system. A transmission cycle of the synchronization signal is always 5ms, regardless of a FDD scheme or a TDD scheme of the LTE. The presence of the synchronization signal indicates that another LTE cell already acquires the available spectrum resources of the unlicensed frequency band.

The spectrum sensing result may be used to determine the spectrum time validity for the LTE cell where the apparatus 300 is located to use the spectrum resources of the unlicensed frequency band.

As shown by a dashed line block in Figure 6, in an example, the apparatus 300 may further include a transmitting unit 303 configured to transmit spectrum sensing results of the first sensing unit 301 and the second sensing unit 302 to a spectrum management apparatus corresponding to the apparatus; and a receiving unit 304 configured to receive information on the determined spectrum time validity from the spectrum management apparatus.

If it is determined by the second sensing unit 302 that the signal is an LTE signal, the spectrum sensing result include a cell ID and information on signal quality of an LTE system corresponding to the LTE signal.

In this case, the spectrum management apparatus is arranged, for example, on a macro base station side or in a core network. The spectrum management apparatus determines the spectrum time validity for the cell in which the apparatus 300 is located based on the spectrum sensing result. The spectrum management apparatus may be the spectrum management apparatus 100 or 200 described in the foregoing embodiments, alternatively, may be other apparatus that determines the spectrum time validity based on the spectrum sensing result.

As another example, as shown by another dashed line block in Figure 6, the apparatus 300 may further include a determining unit 305 configured to determine in different manners, based on the spectrum sensing results of the first sensing unit 301 and the second sensing unit 302, spectrum time validity for the LTE system where the apparatus is located to use the unlicensed frequency band.

In this example, no spectrum management apparatus is provided, and the functions of the spectrum management apparatus are executed by the determining unit 305. For example, the determining unit 305 may be configured to determine, in the case that the first sensing unit 301 determines that there is no signal transmitting on the unlicensed frequency band, a predetermined period of time starting from a current time instant as the spectrum time validity for the LTE system where the apparatus is located.

In addition, the first sensing unit 301 may be further configured to sense a WiFi signal, and the predetermined period of time is determined based on prior knowledge of the usage of the unlicensed frequency band by a WiFi system and an LTE system and a sensing result on the WiFi signal. For example, in the case of large communication traffic for the WiFi system, a short predetermined period of time may be set for the LTE system, otherwise a long predetermined period of time may be set. Further, the setting of the predetermined period of time may be dynamically adjusted based on a current sensing result on the WiFi signal. In this way, the spectrum resources of the unlicensed frequency band may be occupied impartially by the WiFi system and the LTE system as needed.

In this example, the transmitting unit 303 is configured to transmit information including a cell ID and the spectrum time validity of the LTE system, after the LTE system in which the apparatus 300 is located acquires the spectrum resources of the unlicensed frequency band. For example, the transmitting unit 303 may transmit the information via system information on the unlicensed frequency band. In this way, if the synchronization signal of the LTE system is detected by an apparatus 300 in another LTE system, the apparatus 300 in the another LTE can continue receiving its downlink reference signal such as CRS, performing channel estimation, and further acquiring a system information block SIB from a PDSCH, to acquire information on the spectrum time validity therein. In addition, the transmitting unit 303 may transmit the information via a MBSFN sub frame over the licensed frequency band. In this way, other LTE systems may determine their own spectrum time validity based on the spectrum time validity information in the MBSFN sub frame. Further, the user equipment may also select an LTE cell to access by listening to the spectrum time validity information in the MBSFN sub frame, for example, in an application scenario without an assistance of the licensed frequency band, the user equipment in a RRC idle state listens to the spectrum time validity information in the MBSFN sub frame and selects a cell based on the spectrum time validity information in combination with the intensity of a measured signal, and may access the selected cell via a random access process.

In addition, the receiving unit 304 may be configured to receive, in the case that the second sensing unit 302 detects that the signal is an LTE signal, system information transmitted from an LTE system corresponding to the LTE signal. The system information includes information on spectrum time validity of the LTE system. The determining unit 305 is configured to determine the spectrum time validity in the system information as the spectrum time validity for the LTE system where the apparatus is located to use the unlicensed frequency band.

As described above, the apparatus 300 may perform two steps of spectrum sensing, so as to determine the spectrum time validity for the cell where the apparatus 300 is located to use the spectrum resources of the unlicensed frequency band based on the spectrum sensing results. In this case, the spectrum resources of the unlicensed frequency band can be used more flexibly.

### <Fourth embodiment

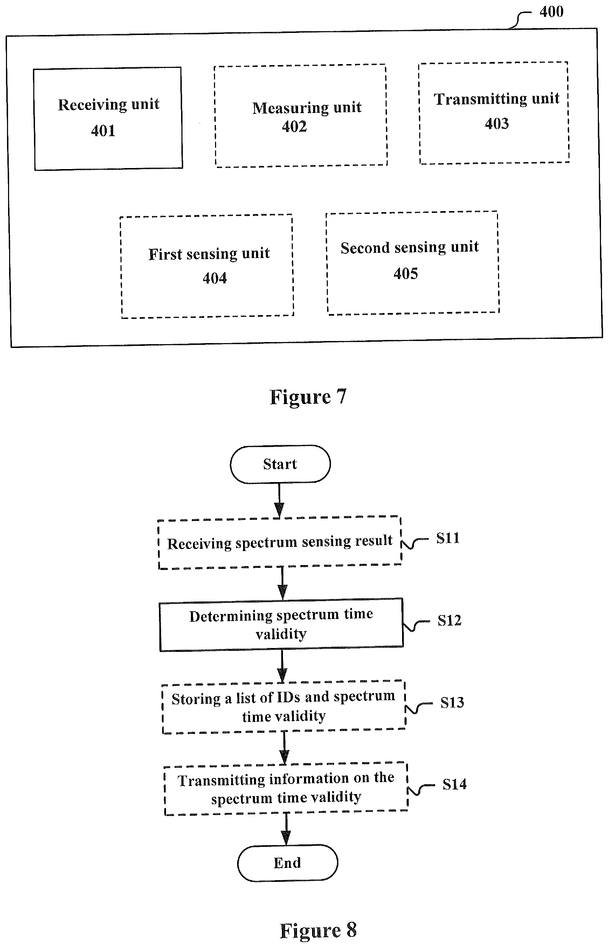

Figure 7 shows a block diagram of a structure of a user equipment 400 for wireless communications according to an embodiment of the present application. The user equipment 400 includes a receiving unit 401 configured to receive information on spectrum time validity for an LTE system to be accessed by the user equipment, based on which the LTE system is allowed to use an unlicensed frequency band.

For example, the user equipment 400 may acquire the information on the spectrum time validity of the LTE system to be accessed by itself from a spectrum management apparatus or a macro base station, alternatively, may acquire the above information on the spectrum time validity by receiving system information broadcasted on the unlicensed frequency band by an LTE system already using the unlicensed frequency band.

In an example, the receiving unit 401 may be further configured to receive a cell ID of the LTE system to be accessed by the user equipment. For example, in the case that there are multiple accessible LTE systems, the receiving unit 401 determines a cell to be accessed by the user equipment by receiving the cell ID. The receiving unit 401 may receive the information on spectrum time validity and the cell ID of the LTE system to be accessed via one of: a broadcast channel (BCH), a physical downlink control channel (PDCCH), or a physical downlink shared channel (PDSCH). Alternatively, the receiving unit 402 may receive the information on the spectrum time validity and the cell ID of the LTE system to be accessed by receiving RRC signaling. In a more specific example, the receiving unit 401 receives the above information from a primary cell (such as a macro cell) via a primary carrier over the licensed frequency band to obtain the assistance of the licensed frequency band, to perform a licensed assisted access (LAA). In addition, the receiving unit may receive SIB information on the unlicensed frequency band, which is transmitted from a cell of an LTE system using the unlicensed frequency band, so as to extract information on spectrum time validity.

As shown by a dashed line block in Figure 7, the user equipment 400 further includes: a measuring unit 402, configured to measure signal quality of LTE systems on the unlicensed frequency band; and a transmitting unit 403, configured to transmit the measuring result and a cell ID of a corresponding LTE system to a spectrum management apparatus corresponding to the user equipment, to be used by the spectrum management apparatus to determine an LTE system to be accessed by the user equipment.

For example, the spectrum management apparatus determines spectrum time validity of the LTE systems based on the received cell IDs and selects an appropriate LTE system for the user equipment to access, based on a service requirement of the user equipment in combination with information on signal quality of the LTE systems and the spectrum time validity of the LTE systems. The signal quality is represented, for example, by RSRP/RSRQ and is included in, for example, an RRM measurement report by the user equipment 400.

In addition, as shown by a dashed line block in Figure 7, the user equipment 400 may further include: a first sensing unit 404, configured to perform energy sensing on the unlicensed frequency band to determine whether there is a signal transmitting over the unlicensed frequency band; and a second sensing unit 405, configured to detect, in the case that the first sensing unit 404 determines that there is a signal transmitting over the unlicensed frequency band, whether the signal is an LTE signal.

In other words, the user equipment 400 itself can perform two steps of spectrum sensing, which can provide a more accurate spectrum sensing result. The first sensing unit 404 and the second sensing unit 405 have the same structures and functions as the first sensing unit 301 and the second sensing unit 302 in the third embodiment, and are not be repeated herein.

### <Fifth embodiment>

In the process of describing the apparatus, the spectrum management apparatus and the user equipment for wireless communications in the embodiments described above, obviously, some processing and methods are also disclosed. Hereinafter, an overview of the methods is given without repeating some details disclosed above. However, it should be noted that, although the methods are disclosed in a process of describing the apparatus, the spectrum management apparatus and the user equipment for wireless communications, the methods do not certainly employ or are not certainly executed by the aforementioned components. For example, the embodiments of the apparatus, the spectrum management apparatus and the user equipment for wireless communications may be partially or completely implemented with hardware and/or firmware, the methods described below may be executed by a computer-executable program completely, although the hardware and/or firmware of the apparatus, the spectrum management apparatus and the user equipment for wireless communications can also be used in the methods.

Figure 8 shows a flowchart of a spectrum management method for wireless communications according to an embodiment of the present application. The method includes: determining in different manners, based on a spectrum sensing result with respect to an unlicensed frequency band by an LTE system in a management range, spectrum time validity for the LTE system to use the unlicensed frequency band (S12).

For example, in step S12, in the case that the spectrum sensing result indicates that there exists another LTE system using spectrum resources of the unlicensed frequency band, spectrum time validity for the LTE system performing the spectrum sensing is determined based on the spectrum time validity for the existing another LTE system using the unlicensed frequency band. The spectrum time validity may include a spectrum usage expiration time to use the spectrum resources of an unlicensed frequency band.

In another aspect, in step S12, in the case that the spectrum sensing result indicates that there is no signal transmitting on the unlicensed frequency band, a predetermined period of time starting from a current time instant is determined as the spectrum time validity for the LTE system performing the spectrum sensing. For example, the predetermined period of time may be determined based on a usage duration in which a WiFi system and an LTE system within a predetermined range of a location of the LTE system performing the spectrum sensing use the unlicensed frequency band.

As shown by a dashed line block in Figure 8, the method may further include a step S13: storing a list of cell IDs of the LTE systems using the unlicensed frequency band and corresponding spectrum time validity. As an example, the list may further include at least one of: an identifier of an operator operating an LTE system, a geographic location of the LTE system, and an identifier of an unlicensed frequency band occupied by the LTE system.

In another example, the method further includes: receiving a spectrum sensing result from a base station and/or a user equipment of the LTE system performing the spectrum sensing (S11), and transmitting information on determined spectrum time validity to the base station and/or user equipment of the LTE system (S14). In steps S11 and S14, the spectrum sensing result may be received and the information on the spectrum time validity may be transmitted, on a licensed frequency band. For example, the spectrum sensing result includes the cell IDs and information on signal quality of the detected other LTE systems using the spectrum resources of the unlicensed frequency band.

In step S12, based on the cell ID of the other LTE system using the unlicensed spectrum band, the spectrum time validity corresponding to the cell ID can be obtained. The acquired spectrum time validity is determined as the spectrum time validity of the LTE system performing the spectrum sensing.

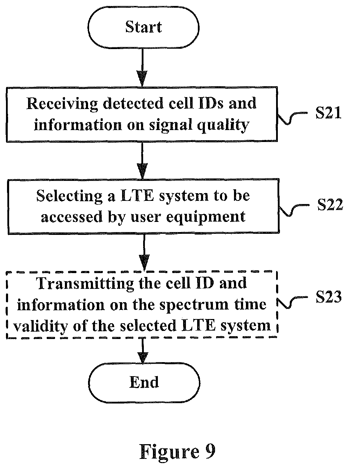

Figure 9 shows a flowchart of a spectrum management method for wireless communications according to another embodiment of the present application. The method includes: receiving, from a user equipment, cell IDs and information on signal quality of LTE systems detected on an unlicensed frequency band (S21); and determining spectrum time validity corresponding to the LTE systems based on the cell IDs of the LTE systems and selecting, based on the determined spectrum time validity, one of the detected LTE systems for the user equipment to access in (S22).

In step S22, the selection may be performed further based on a service requirement of the user equipment and/or information on the signal quality.

As shown by a dashed box in Figure 9, the method further includes: transmitting the cell ID and information on the spectrum time validity of the selected LTE system to the user equipment (S23). For example, in step S23, the information on the spectrum time validity and the cell ID of the selected LTE system may be transmitted to the user equipment via one of: a broadcast channel (BCH), a physical downlink control channel (PDCCH), or a physical downlink shared channel (PDSCH).

Although not shown in Figure 9, the above method may include at least one of the following steps: interchanging the cell IDs and the information on the spectrum time validity of the LTE systems in respective management ranges among the spectrum management apparatuses; transmitting the cell IDs and the information on the spectrum time validity of the LTE systems that have obtained the spectrum resources of the unlicensed frequency band by transmitting a MBSFN sub frame on the licensed frequency band.

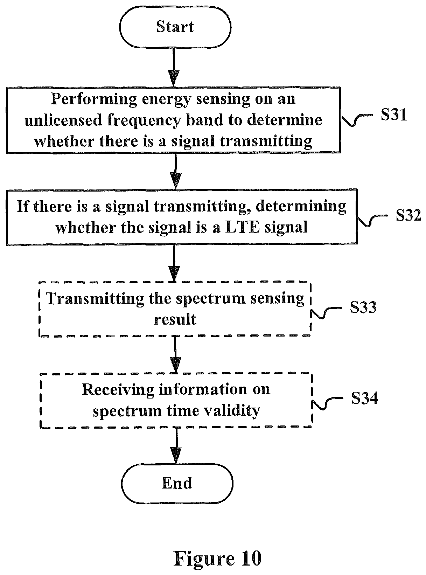

Figure 10 shows a flowchart of a method for wireless communications according to an embodiment of the present application. The method includes: performing an energy sensing on an unlicensed frequency band to determine whether there is a signal transmitting on the unlicensed frequency band (S31); and if it is determined that there is a signal transmitted over the unlicensed frequency band, detecting whether the signal is an LTE signal (S32).

In step S32, it may be detected whether the signal is an LTE signal by detecting a synchronization signal PSS of the LTE system.

As shown by a dashed line block in Figure 10, the method may further include: transmitting a spectrum sensing result to a corresponding spectrum management apparatus (S33); and receiving information on determined spectrum time validity from the spectrum management apparatus (S34). For example, if it is determined in step S32 that the signal is an LTE signal, the spectrum sensing result includes a cell ID and information on its signal quality, of an LTE system corresponding to the LTE signal.

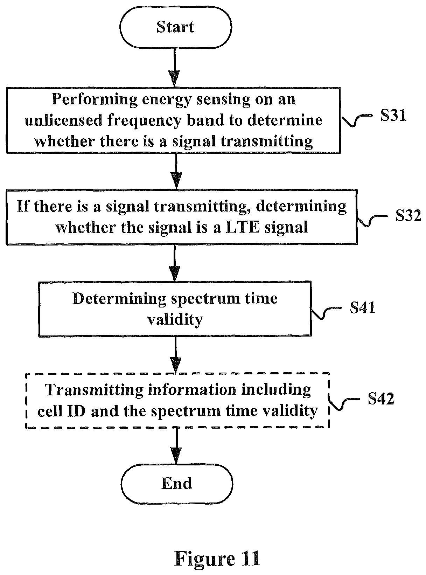

Figure 11 shows a flowchart of another example of the above method for wireless communications. In addition to steps S31 and S32, the method further includes step S41: determining in different manners, based on the spectrum sensing result in steps S31 and S32, spectrum time validity for a current LTE system to use the unlicensed frequency band. For example, if it is determined in step S31 that there is no signal transmitting over the unlicensed frequency band, a predetermined period of time starting from a current time instant is determined as the spectrum time validity for the current LTE system in step S41.

In an example, a WiFi signal is also sensed in step S31 and the predetermined period of time is determined based on prior knowledge during the using of the unlicensed frequency band by a WiFi system and an LTE system and a sensing result on the WiFi signal.

As shown by a dashed line block in Figure 11, the method may further include step S42: after the current LTE system acquires spectrum resources of the unlicensed frequency band, transmitting information including a cell ID and the spectrum time validity of the LTE system. For example, the above information may be transmitted via system information on the unlicensed frequency band. The information may also be transmitted via a MBSFN sub frame on the licensed frequency band.

As an example, in step S41, if it is detected that the signal is the LTE signal, system information transmitted from an LTE system corresponding to the LTE signal is received, with the system information including information on spectrum time validity of the LTE system. The spectrum time validity in the system information is determined as the spectrum time validity for the current LTE system to use the unlicensed frequency band.

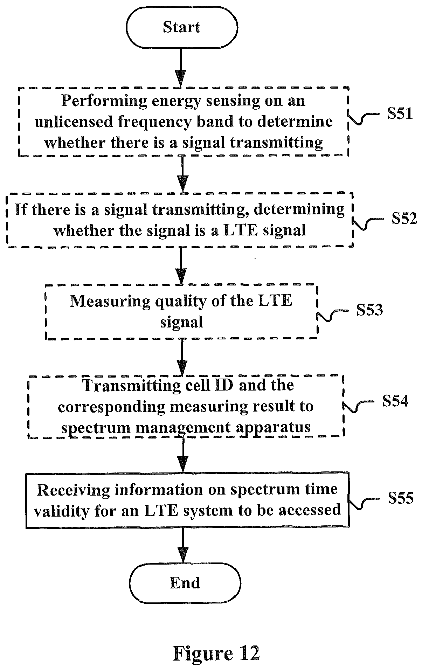

Figure 12 shows a method for a user equipment in wireless communications according to an embodiment of the present application. The method includes: receiving information on spectrum time validity for an LTE system to be accessed by the user equipment, based on which the LTE system is allowed to use an unlicensed frequency band (S55). In an example, in step S55, a cell ID of the LTE system to be accessed by the user equipment is also received.

The cell ID and the information on the spectrum time validity of the LTE system to be accessed may be received via one of: a broadcast channel (BCH), a physical downlink control channel (PDCCH) or a physical downlink shared channel (PDSCH). Alternatively, The cell ID and the information on the spectrum time validity of the LTE system to be accessed may also be received by receiving RRC signaling.

As shown by a dashed line block in Figure 12, the method may further include: performing energy sensing on the unlicensed frequency band to determine whether there is a signal transmitted over the unlicensed frequency band (S51); and if it is determined that there is a signal transmitting over the unlicensed frequency band, detecting whether the signal is an LTE signal (S52). In other words, two spectrum sensing steps are performed on a user equipment side.

Further, the method may further include: measuring signal quality of LTE systems over the unlicensed frequency band (S53); and transmitting the measuring result and cell IDs of the LTE systems to a spectrum management apparatus corresponding to the user equipment, for the spectrum management apparatus to determine an LTE system to be accessed by the user equipment (S54).

It should be noted that the above methods may be used in combination or separately, the details thereof have been described in detail in the first to fourth embodiments, which are not repeated herein.

The basic principle of the present invention has been described above in conjunction with particular embodiments. However, as can be appreciated by those ordinarily skilled in the art, all or any of the steps or components of the method and device according to the invention can be implemented in hardware, firmware, software or a combination thereof in any computing device (including a processor, a storage medium, etc.) or a network of computing devices by those ordinarily skilled in the art in light of the disclosure of the invention and making use of their general circuit designing knowledge or general programming skills.

Those skilled in the art can understand that, for example, the determining unit, the storage unit, the first sensing unit, the second sensing unit, the measuring unit and the like in the apparatus described above, may be implemented by one or more processors. And, for example, the transceiving unit, the transmitting unit, the receiving unit and the like may be implemented by circuit components such as antennas, filters, modems, and codecs.

Accordingly, an electronic device (1) is further provided according to the present disclosure. The electronic device (1) includes a circuit configured to determine in different manners, based on a spectrum sensing result with respect to an unlicensed frequency band by an LTE system in a management range, spectrum time validity for the LTE system to use the unlicensed frequency band.

An electronic device (2) is further provided according to the present disclosure. The electronic device (2) includes a circuit configured to receive, from a user equipment, cell IDs and information on corresponding signal quality, of LTE systems detected over an unlicensed frequency band by the user equipment; and determine spectrum time validity corresponding to each LTE system based on the cell ID of the LTE system, and select, based on the determined spectrum time validity, one of the detected LTE systems for the user equipment to access in.

An electronic device (3) is further provided according to the present disclosure. The electronic device (3) includes a circuit configured to: perform energy sensing with respect to an unlicensed frequency band to determine whether there is a signal transmitting over the unlicensed frequency band; and detect, in the case that it is determined that there is a signal transmitting over the unlicensed frequency band, whether the signal is an LTE signal.

An electronic device (4) is further provided according to the present disclosure. The electronic device (4) includes a circuit configured to receive information on spectrum time validity for an LTE system to be accessed by the user equipment, based on which the LTE system is allowed to use an unlicensed frequency band.

Moreover, the present invention further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present invention. The memory medium includes but is not limited to soft disc, optical disc, magnetic optical disc, memory card, memory stick and the like.

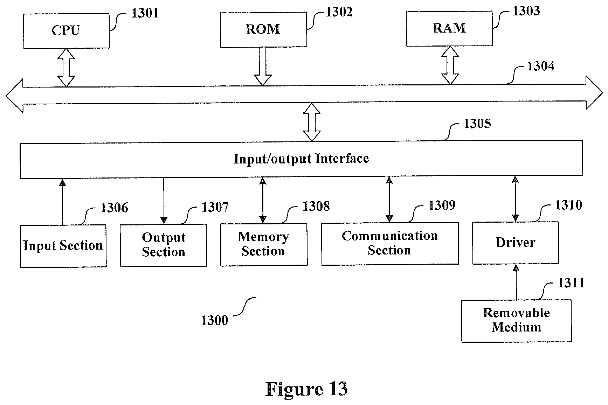

In the case where the present application is realized by software or firmware, a program constituting the software is installed in a computer with a dedicated hardware structure (e.g. the general computer 1300 shown in Figure 13) from a storage medium or network, wherein the computer is capable of implementing various functions when installed with various programs.

In Figure 13, a central processing unit (CPU) 1301 executes various processing according to a program stored in a read-only memory (ROM) 1302 or a program loaded to a random access memory (RAM) 1303 from a memory section 1308. The data needed for the various processing of the CPU 1301 may be stored in the RAM 1303 as needed. The CPU 1301, the ROM 1302 and the RAM 1303 are linked with each other via a bus 1304. An input/output interface 1305 is also linked to the bus 1304.

The following components are linked to the input/output interface 1305: an input section 1306 (including keyboard, mouse and the like), an output section 1307 (including displays such as a cathode ray tube (CRT), a liquid crystal display (LCD), a loudspeaker and the like), a memory section 1308 (including hard disc and the like), and a communication section 1309 (including a network interface card such as a LAN card, modem and the like). The communication section 1309 performs communication processing via a network such as the Internet. A driver 1310 may also be linked to the input/output interface 1305. If needed, a removable medium 1311, for example, a magnetic disc, an optical disc, a magnetic optical disc, a semiconductor memory and the like, may be installed in the driver 1310, so that the computer program read therefrom is installed in the memory section 1308 as appropriate.

In the case where the foregoing series of processing is achieved by software, programs forming the software are installed from a network such as the Internet or a memory medium such as the removable medium 1311.

It should be appreciated by those skilled in the art that the memory medium is not limited to the removable medium 1311 shown in Figure 13, which has program stored therein and is distributed separately from the apparatus so as to provide the programs to users. The removable medium 1311 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1302 and the memory section 1308 in which programs are stored, and can be distributed to users along with the device in which they are incorporated.

### < 4. Application example>

The technology of the present disclosure is applicable to various products. For example, the spectrum management apparatus 100 and 200 each may be realized as any type of server such as a tower server, a rack server, and a blade server. The spectrum management apparatus 100 and 200 may be a control module (such as an integrated circuit module including a single die, and a card or a blade that is inserted into a slot of a blade server) mounted on a server.

In addition, the above base station may be implemented as any type of evolved Node B (eNB) such as a macro eNB and a small eNB. The small eNB may be an eNB such as a pico eNB, a micro eNB, and a home (femto) eNB that covers a cell smaller than a macro cell. Instead, the base station may be realized as any other types of base stations such as a NodeB and a base transceiver station (BTS). The base station may include a main body (that is also referred to as a base station apparatus) configured to control radio communication, and one or more remote radio heads (RRH) disposed in a different place from the main body. In addition, various types of use equipments, which will be described below, may each operate as the base station by temporarily or semi-persistently executing a base station function.

For example, the user equipment 400 may be realized as a mobile terminal such as a smartphone, a tablet personal computer (PC), a notebook PC, a portable game terminal, a portable/dongle type mobile router, and a digital camera, or an in-vehicle terminal such as a car navigation apparatus. The user equipment 400 may also be realized as a terminal (that is also referred to as a machine type communication (MTC) terminal) that performs machine-to-machine (M2M) communication. Furthermore, the user equipment 400 may be a radio communication module (such as an integrated circuit module including a single die) mounted on each of the terminals.

To be further noted, in the apparatus, method and system according to the invention, the respective components or steps can be decomposed and/or recombined. These decompositions and/or recombinations shall be regarded as equivalent schemes of the invention. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ...... " in which an element is defined will not preclude presence of an additional identical element(s) in a process, method, article or device comprising the defined element(s)" unless further defined.

Although the embodiments of the invention have been described above in detail in connection with the drawings, it shall be appreciated that the embodiments as described above are merely illustrative but not limitative of the invention. Those skilled in the art can make various modifications and variations to the above embodiments without departing from the invention as defined in the claims. Therefore, the scope of the invention is defined merely by the appended claims.

## Claims

1. A spectrum management apparatus (100, 200) for wireless communications, comprising:
a determining unit (101, 201), configured to determine, based on a spectrum sensing result with respect to an unlicensed frequency band by an LTE system performing the spectrum sensing in a management range of the spectrum management apparatus, spectrum time validity for the LTE system performing the spectrum sensing to use the unlicensed frequency band,
wherein the determining unit is configured to, in the case that the spectrum sensing result indicates there exists another LTE system using spectrum resources of the unlicensed frequency band, determine spectrum time validity for the LTE system performing the spectrum sensing based on the spectrum time validity for the existing another LTE system; and
**characterised by** comprising a transceiving unit (102, 202), configured to receive the spectrum sensing result from a base station and/or a user equipment of the LTE system performing the spectrum sensing, and transmit information on the determined spectrum time validity to the base station and/or user equipment of the LTE system performing the spectrum sensing.

2. The spectrum management apparatus according to claim 1, wherein the spectrum time validity comprises a spectrum usage expiration time to make use of the spectrum resources of the unlicensed frequency band.

3. The spectrum management apparatus according to claim 1, wherein the determining unit is configured to, in the case that the spectrum sensing result indicates that there is no signal transmitting over the unlicensed frequency band, determine a predetermined period of time starting from a current time instant as the spectrum time validity for the LTE system performing the spectrum sensing.

4. The spectrum management apparatus according to claim 3, wherein the determining unit is further configured to determine the predetermined period of time based on a usage duration in which a WiFi system and an LTE system within a predetermined range of a location of the LTE system performing the spectrum sensing use the unlicensed frequency band.

5. The spectrum management apparatus according to claim 1, further comprising:
a storage unit, configured to store a list of a cell ID of the existing LTE system using the unlicensed frequency band and a corresponding spectrum time validity,
wherein the list further comprises at least one of: an identifier of an operator which the LTE system belongs to, a geographical location where the LTE system is located, and an identifier of an unlicensed frequency band occupied by the LTE system.

6. The spectrum management apparatus according to claim 1, wherein the spectrum sensing result comprises a cell ID and information on signal quality, of the detected another LTE system using the spectrum resources of the unlicensed frequency band.

7. The spectrum management apparatus according to claim 6, wherein the determining unit acquires a corresponding spectrum time validity based on the cell ID of the another LTE system, and determines the acquired spectrum time validity as the spectrum time validity of the LTE system performing the spectrum sensing.

8. An apparatus (300,400) for wireless communications, comprising:
a first sensing unit (301,404), configured to perform energy sensing with respect to an unlicensed frequency band to determine whether there is a signal transmitting over the unlicensed frequency band;
a second sensing unit (302, 405), configured to detect, in the case that the first sensing unit determines that there is a signal transmitting over the unlicensed frequency band, whether the signal is an LTE signal,
and **characterised by** comprising a transmitting unit (303, 403), configured to transmit a spectrum sensing result of the first sensing unit and a spectrum sensing result of the second sensing unit to a spectrum management apparatus corresponding to the apparatus; and
a receiving unit (304, 401), configured to receive information on a determined spectrum time validity from the spectrum management apparatus.

## Patentansprüche

1. Spektrumsverwaltungsvorrichtung (100, 200) für drahtlose Kommunikation, die Folgendes umfasst:
eine Bestimmungseinheit (101, 201), ausgelegt zum Bestimmen, basierend auf einem Spektrumserfassungsergebnis bezüglich eines nicht lizenzierten Frequenzbands durch ein LTE-System, das die Spektrumserfassung in einem Verwaltungsbereich der Spektrumsverwaltungsvorrichtung durchführt, von Spektrumszeitgültigkeit für das LTE-System, das die Spektrumserfassung durchführt, um das nicht lizenzierte Frequenzband zu verwenden,
wobei die Bestimmungseinheit dazu ausgelegt ist, in dem Fall, dass das Spektrumserfassungsergebnis anzeigt, dass ein anderes LTE-System vorhanden ist, das Spektrumsressourcen des nicht lizenzierten Frequenzbands verwendet, Spektrumszeitgültigkeit für das LTE-System zu bestimmen, das die Spektrumserfassung durchführt, basierend auf der Spektrumszeitgültigkeit für das vorhandene andere LTE-System; und
**dadurch gekennzeichnet, dass** es Folgendes umfasst:
eine Sende-Empfangs-Einheit (102, 202), dazu ausgelegt, das Spektrumserfassungsergebnis von einer Basisstation und/oder einem Benutzergerät des LTE-Systems, das die Spektrumserfassung durchführt, zu empfangen und Informationen zu der bestimmten Spektrumszeitgültigkeit an die Basisstation und/oder das Benutzergerät des LTE-Systems, das die Spektrumserfassung durchführt, zu senden.

2. Spektrumsverwaltungsvorrichtung nach Anspruch 1, wobei die Spektrumszeitgültigkeit eine Spektrumsverwendungsablaufzeit zum Verwenden der Spektrumsressourcen des nicht lizenzierten Frequenzbands umfasst.

3. Spektrumsverwaltungsvorrichtung nach Anspruch 1, wobei die Bestimmungseinheit dazu ausgelegt ist, in dem Fall, dass das Spektrumserfassungsergebnis anzeigt, dass es kein Signal gibt, das über das nicht lizenzierte Frequenzband übertragen wird, eine vorbestimmte Periode von Zeit, beginnend bei einem aktuellen Zeitpunkt, als Spektrumszeitgültigkeit für das LTE-System, das die Spektrumserfassung durchführt, zu bestimmen.

4. Spektrumsverwaltungsvorrichtung nach Anspruch 3, wobei die Bestimmungseinheit ferner dazu ausgelegt ist, die vorbestimmte Periode von Zeit basierend auf einer Verwendungsdauer zu bestimmen, in der ein WiFi-System und ein LTE-System innerhalb einer vorbestimmten Reichweite eines Ortes des LTE-Systems, das die Spektrumserfassung durchführt, das nicht lizenzierte Frequenzband verwenden.

5. Spektrumsverwaltungsvorrichtung nach Anspruch 1, die ferner Folgendes umfasst:
eine Speichereinheit, dazu ausgelegt, eine Liste einer Zellen-ID des vorhandenen LTE-Systems unter Verwendung des nicht lizenzierten Frequenzbands und einer entsprechenden Spektrumszeitgültigkeit zu speichern,
wobei die Liste ferner zumindest eines aus Folgendem umfasst: eine Kennung eines Betreibers, zu dem das LTE-System gehört, einen geografischen Ort, an dem sich das LTE-System befindet, und eine Kennung eines nicht lizenzierten Frequenzbands, das durch das LTE-System belegt ist.

6. Spektrumsverwaltungsvorrichtung nach Anspruch 1, wobei das Spektrumserfassungsergebnis eine Zellen-ID und Informationen zur Signalqualität des detektierten anderen LTE-Systems unter Verwendung von Spektrumsressourcen des nicht lizenzierten Frequenzbands umfasst.

7. Spektrumsverwaltungsvorrichtung nach Anspruch 6, wobei die Bestimmungseinheit eine entsprechende Spektrumszeitgültigkeit basierend auf der Zellen-ID des anderen LTE-Systems erfasst und die erfasste Spektrumszeitgültigkeit als die Spektrumszeitgültigkeit des LTE-Systems, das die Spektrumserfassung durchführt, bestimmt.

8. Vorrichtung (300, 400) für drahtlose Kommunikationen, die Folgendes umfasst:
eine erste Erfassungseinheit (301, 404), dazu ausgelegt, Energieerfassung bezüglich eines nicht lizenzierten Frequenzbands durchzuführen, um zu bestimmen, ob es ein Signal gibt, das über das nicht lizenzierte Frequenzband übertragen wird;
eine zweite Erfassungseinheit (302, 405), dazu ausgelegt, in dem Fall, dass die erste Erfassungseinheit bestimmt, dass es ein Signal gibt, das über das nicht lizenzierte Frequenzband übertragen wird, zu detektieren, ob das Signal ein LTE-Signal ist, und
**dadurch gekennzeichnet, dass** es Folgendes umfasst:
eine Sendeeinheit (303, 403), dazu ausgelegt, ein Spektrumserfassungsergebnis der ersten Erfassungseinheit und ein Spektrumserfassungsergebnis der zweiten Erfassungseinheit an eine Spektrumsverwaltungsvorrichtung entsprechend der Vorrichtung zu senden; und
eine Empfangseinheit (304, 401), dazu ausgelegt, Informationen zu einer bestimmten Spektrumszeitgültigkeit von der Spektrumsverwaltungsvorrichtung zu empfangen.

## Revendications

1. Appareil de gestion de spectre (100, 200) pour des communications sans fil, comprenant :
une unité de détermination (101, 201), configurée de façon à déterminer, en se basant sur un résultat de détection de spectre relativement à une bande de fréquences non licenciée avec un système LTE de l'appareil exécutant la détection du spectre dans une portée de gestion de l'appareil de gestion de spectre, la validité de temps du spectre pour que le système LTE exécutant la détection du spectre utilise la bande de fréquences non licenciée,
cette unité de détermination étant configurée de façon à, dans le cas où le résultat de détection du spectre indique qu'il existe un autre système LTE utilisant les ressources de spectre de la bande de fréquences non licenciée, déterminer la validité de temps du spectre pour le système LTE exécutant la détection du spectre en se basant sur la validité de temps du spectre pour l'autre système LTE existant ; et
**caractérisé en ce qu'**il comprend
une unité d'émission-réception (102, 202), configurée de façon à recevoir le résultat de détection du spectre d'une station de base et/ou d'un équipement utilisateur du système LTE exécutant la détection du spectre, et à émettre des informations sur la validité de temps du spectre déterminée à la station de base et/ou à l'équipement utilisateur du système LTE exécutant la détection du spectre.

2. Appareil de gestion de spectre selon la revendication 1,
dans lequel la validité de temps du spectre comprend un temps d'expiration d'utilisation du spectre pour utiliser les ressources du spectre de la bande de fréquences non licenciée.

3. Appareil de gestion de spectre selon la revendication 1, dans lequel l'unité de détermination est configurée de façon à, dans le cas où le résultat de détection du spectre indique qu'il n'y a pas d'émission de signal sur la bande de fréquences non licenciée, déterminer une période de temps prédéterminée commençant à partir d'un instant de temps courant comme la validité de temps du spectre pour le système LTE exécutant la détection du spectre.

4. Appareil de gestion de spectre selon la revendication 3, dans lequel l'unité de détermination est configurée en outre de façon à déterminer la période de temps prédéterminée en se basant sur une durée d'utilisation pendant laquelle un système wifi et un système LTE dans les limites d'une distance prédéterminée d'un emplacement du système LTE exécutant la détection du spectre utilisent la bande de fréquences non licenciée.

5. Appareil de gestion de spectre selon la revendication 1, comprenant en outre :
une unité de stockage, configurée de façon à stocker une liste d'un ID de cellule du système LTE existant utilisant la bande de fréquences non licenciée et une validité de temps de spectre correspondante,
cette liste comprenant en outre au moins : soit un identifiant d'un opérateur auquel le système LTE appartient, soit un emplacement géographique où le système LTE est situé, soit un identifiant d'une bande de fréquences non licenciée occupée par le système LTE.

6. Appareil de gestion de spectre selon la revendication 1, dans lequel le résultat de détection du spectre comprend un ID de cellule et des informations sur la qualité du signal, de l'autre système LTE utilisant les ressources du spectre de la bande de fréquences non licenciée.

7. Appareil de gestion de spectre selon la revendication 6, dans lequel l'unité de détermination acquiert une validité de temps de spectre correspondante en se basant sur l'ID de cellule de l'autre système LTE, et détermine la validité de temps du spectre acquise comme la validité de temps du spectre du système LTE exécutant la détection du spectre.

8. Appareil (300, 400) pour des communications sans fil, comprenant :
une première unité de détection (301, 404), configurée de façon à exécuter une détection d'énergie relativement à une bande de fréquences non licenciée afin de déterminer s'il y a une émission de signal sur la bande de fréquences non licenciée ;
une deuxième unité de détection (302, 405), configurée de façon à détecter, dans le cas où la première unité de détection détermine qu'il y a une émission de signal sur la bande de fréquences non licenciée, si le signal est un signal LTE,
et **caractérisé en ce qu'**il comprend
une unité d'émission (303, 403), configurée de façon à émettre un résultat de détection de spectre de la première unité de détection et un résultat de détection de spectre de la deuxième unité de détection à un appareil de gestion de spectre correspondant à l'appareil ; et
une unité de réception (304, 401), configurée de façon à recevoir des informations sur une validité de temps de spectre déterminée d'un appareil de gestion de spectre.
